# EUROPEAN PATENT APPLICATION

(11) **EP 4 606 504 A1**
(43) Date of publication of application: **27.08.2025**
(21) Application number: 25158909.9
(22) Date of filing: 19.02.2025
(51) Int. Cl.: B23C 5/06, B23C 5/22

(54) **MILLING TOOL AND CUTTING INSERT**

(30) Priority: 25.02.2024 US 202418586500
(71) Applicant: KENNAMETAL INC., Latrobe, PA 15650 (US)
(72) Inventor: BRUNETTO, Lance, Latrobe, PA, 15650 (US)
(74) Representative: Prinz & Partner mbB

(57) **Abstract**

A milling tool includes a tool body defining an insert pocket having a main seat floor, and lower, mid, and upper seat walls. A cutting insert having an insert body is disposed in the insert pocket. The insert body includes front and back faces, with first, second, and third main circumferential sides extending between the faces and about the circumference of the insert body. First, second, and third cutting corners are disposed between the main circumferential sides. Each of the main circumferential sides includes two side seating surfaces extending between adjacent cutting corners and having a transition corner disposed therebetween. One of the front or back surfaces engages the main seat floor. Three consecutive side seating surfaces engage the lower, mid, and upper seat wall, respectively. One of the lower, mid, and the upper seat walls or each of the side seating surfaces is generally planar, the other are convex.

## Description

### BACKGROUND

This relates in general to cutting tools with cutting inserts, such as a milling tool adapted to receive selectively removeable inserts, which may be replaced or indexed.

One known tool includes triangular shaped inserts which may be double-sided. A known issue is that for such inserts it can be difficult to produce the insert and tools to comply with the desired tolerances.

It is also known to make 6-sided inserts referred to as "Hexagonal-Trion" or "Trigon" inserts. Such inserts have 6 faces where the angles between the faces alternate between greater than 120 degrees and less than 120, thus giving the hexagon shape a more triangular appearance due to its overall shape. However, in such a design it is still difficult to produce the insert and tools to comply with the desired tolerances, and often the faces of the insert, when disposed in a three-sided pocket, will only make true face contact on two of the three sides. Obtaining true face contact between the insert and the pocket requires extreme precision of both components and any deviation due to manufacturing tolerances will result in line or point contact on only two faces.

### SUMMARY

This relates more particularly to a milling tool and cutting insert for maintaining 3-point/line contact.

In at least one embodiment, a milling tool includes a tool body defining an insert pocket having a main seat floor, and lower, mid, and upper seat walls. A cutting insert having an insert body is disposed in the insert pocket. The insert body includes front and back faces, with first, second, and third main circumferential sides extending between the faces and about the circumference of the insert body. First, second, and third cutting corners are disposed between the main circumferential sides. Each of the main circumferential sides includes two side seating surfaces extending between adjacent cutting corners and having a transition corner disposed therebetween. One of the front or back surfaces engages the main seat floor. Three consecutive side seating surfaces engage the lower, mid, and upper seat wall, respectively. One of the lower, mid, and the upper seat walls or each of the side seating surfaces is generally planar, the other are convex.

In at least one embodiment, a milling tool includes a tool body defining an insert pocket having a main seat floor, a lower seat wall, a mid seat wall, and an upper seat wall. The lower seat wall, the mid seat wall, and the upper seat wall are generally planar. A cutting insert is disposed in the insert pocket. The cutting insert has an insert body including a front face and a back face with first, second, and third main circumferential sides extending between the front face and the back face and about the circumference of the insert body. First, second, and third cutting corners are disposed between the first and second main circumferential sides, the second and third main circumferential sides, and the third and first main circumferential sides respectively. Each of the main circumferential sides including two side seating surfaces extending between adjacent cutting corners and having a transition corner disposed therebetween. Each side seating surface is convex. One of the front surface or the back surface engages the main seat floor. Three consecutive side seating surfaces engages the lower seat wall, the mid seat wall, and the upper seat wall, respectively.

The angle formed by the mid seat wall and the upper seat wall may be less than 120 degrees, and the angle formed by the lower seat wall and the mid seat wall may be greater than 120 degrees.

The lower seat wall, the mid seat wall, and the upper seat wall may be generally oriented at right angles to the main seat floor.

Each of the three consecutive side seating surfaces may engage the lower seat wall, the mid seat wall, and the upper seat wall, respectively at positions clockwise of nominal central locations of each of the lower seat wall, the mid seat wall, and the upper seat wall,

Each of the three consecutive side seating surfaces may engage the lower seat wall, the mid seat wall, and the upper seat wall, respectively at positions counter-clockwise of nominal central locations of each of the lower seat wall, the mid seat wall, and the upper seat wall,

In at least one embodiment, a milling tool includes a tool body defining an insert pocket having a main seat floor, a lower seat wall, a mid seat wall, and an upper seat wall. Each of a lower seat wall, a mid seat wall, and an upper seat wall is convex. A cutting insert is disposed in the insert pocket. The cutting insert has an insert body including a front face and a back face with first, second, and third main circumferential sides extending between the front face and the back face and about the circumference of the insert body. First, second, and third cutting corners are disposed between the first and second main circumferential sides, the second and third main circumferential sides, and the third and first main circumferential sides respectively. Each of the main circumferential sides includes two side seating surfaces extending between adjacent cutting corners and having a transition corner disposed therebetween. Each side seating surface is generally planar. One of the front surface or the back surface engages the main seat floor. Three consecutive side seating surfaces engage the lower seat wall, the mid seat wall, and the upper seat wall, respectively.

Each of the lower seat wall, the mid seat wall, and the upper seat wall may be arcuate in a direction along the circumference of the insert body between respective cutting corners and transition corners.

Each of the lower seat wall, the mid seat wall, and the upper seat wall may be arcuate in a direction along an axis of the insert body between the front face and the back face.

Each of the lower seat wall, the mid seat wall, and the upper seat wall may be arcuate in a direction along the circumference of the insert body between respective cutting corners and transition corners, and arcuate in a direction along an axis of the insert body between the front face and the back face.

Each of the three consecutive side seating surfaces may engage the lower seat wall, the mid seat wall, and the upper seat wall, respectively at positions clockwise of nominal central locations of each of the lower seat wall, the mid seat wall, and the upper seat wall,

Each of the three consecutive side seating surfaces may engage the lower seat wall, the mid seat wall, and the upper seat wall, respectively at positions counter-clockwise of nominal central locations of each of the lower seat wall, the mid seat wall, and the upper seat wall,

In at least one embodiment, a cutting insert for a milling tool includes an insert body having a front face and a back face with first, second, and third main circumferential sides extending between the front face and the back face and about the circumference of the insert body. First, second, and third cutting corners are disposed between the first and second main circumferential sides, the second and third main circumferential sides, and the third and first main circumferential sides respectively. Each of the main circumferential sides includes two side seating surfaces extending between adjacent cutting corners and having a transition corner disposed therebetween. Each side seating surface is convex.

Each side seating surface may be arcuate in a direction along the circumference of the insert body between respective cutting corners and transition corners.

Each side seating surface may be arcuate in a direction along an axis of the insert body between the front face and the back face.

Each side seating surface may be arcuate in a direction along the circumference of the insert body between respective cutting corners and transition corners, and arcuate in a direction along an axis of the insert body between the front face and the back face.

Each of the cutting angles may be formed at the same angle and that angle is less than 120 degrees.

Each of the transition corners may be formed at the same angle and that angle is greater than 120 degrees.

Each of the cutting angles may be formed at the same angle and that angle is less than 120 degrees, and where each of the transition corners is formed at the same angle and that angle is greater than 120 degrees.

The cutting insert may be molded and periphery ground.

The cutting insert may be indexable.

In at least one embodiment, a 6-edge, 6-sided shoulder milling insert is disposed in a corresponding insert pocket formed in a milling tool. Either the insert includes barrel shaped periphery contact surfaces or the insert pocket includes barrel shaped pocket walls that allow for deviation from nominal dimensions due to manufacturing tolerances while still maintaining proper contact between the contact surfaces of the milling insert and the walls of the insert pocket.

Various aspects will become apparent to those skilled in the art from the following detailed description and the accompanying drawings.

### BRIEF DESCRIPTION OF THE DRAWINGS

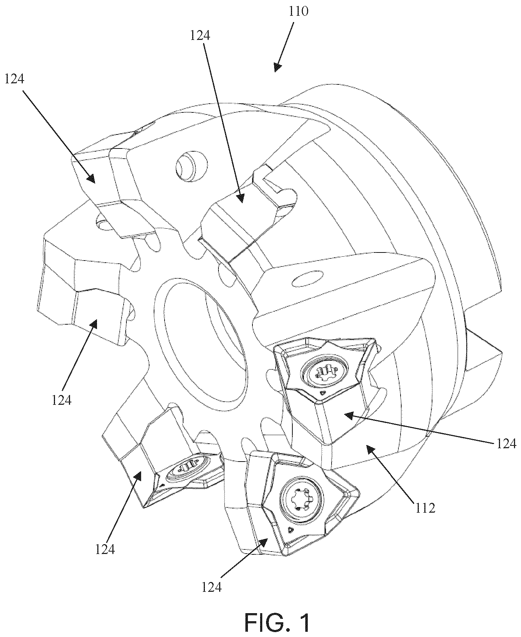

Fig. 1 is a perspective view of a milling tool with a plurality of cutting inserts.

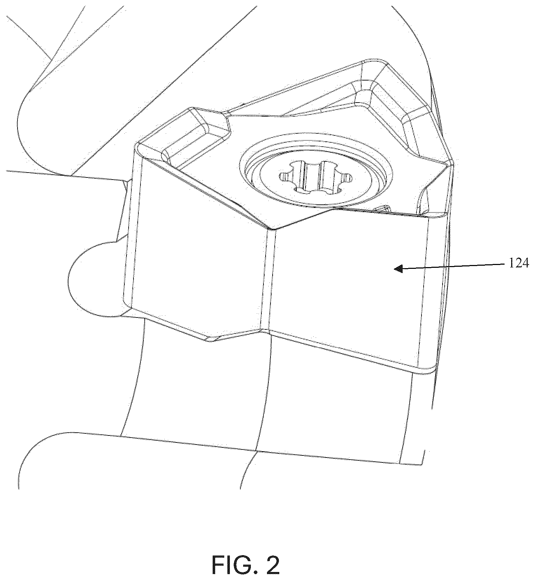

Fig. 2 is an enlarged portion of the tool of Fig. 1 showing one of the cutting inserts disposed in an insert seat.

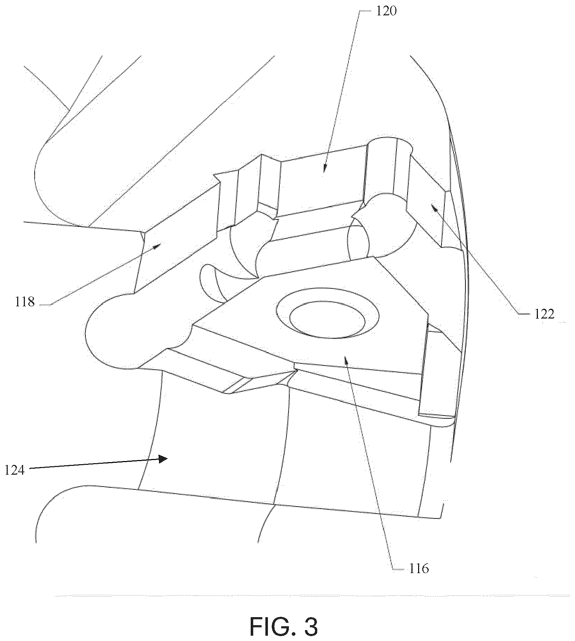

Fig. 3 is a view similar to Fig. 2 except showing the insert seat with the cutting insert removed.

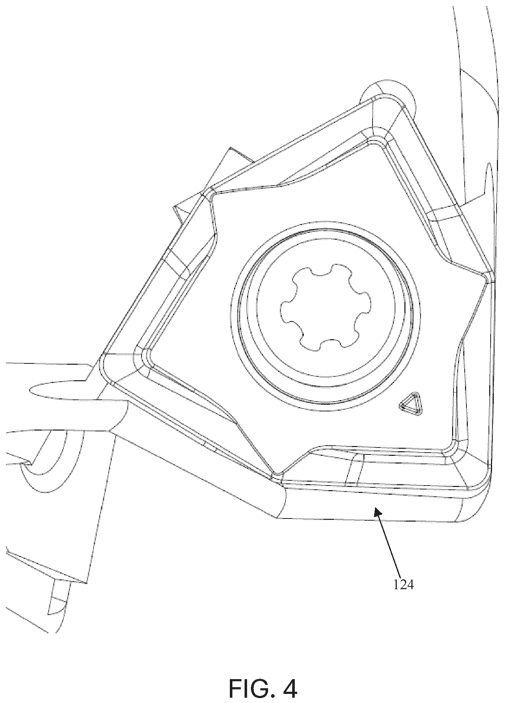

Fig. 4 is a front view of the portion of the cutting tool with cutting insert of Fig. 2.

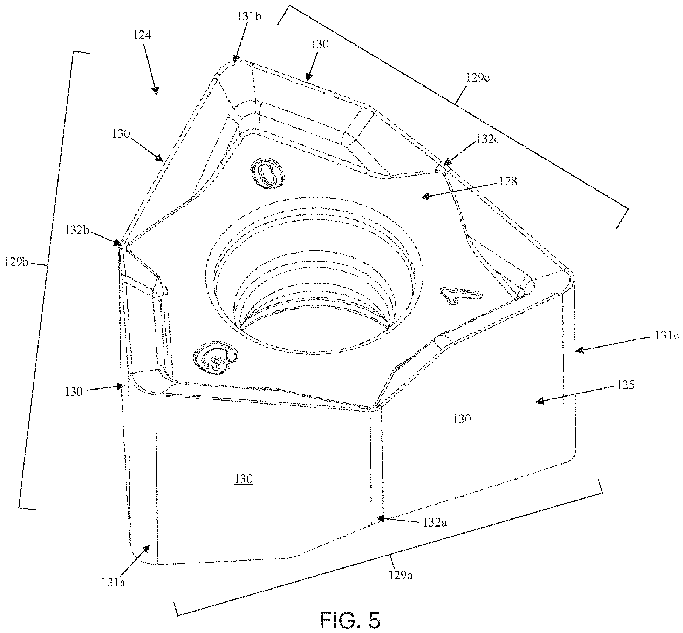

Fig. 5 is a back perspective view of the cutting insert of Fig. 2.

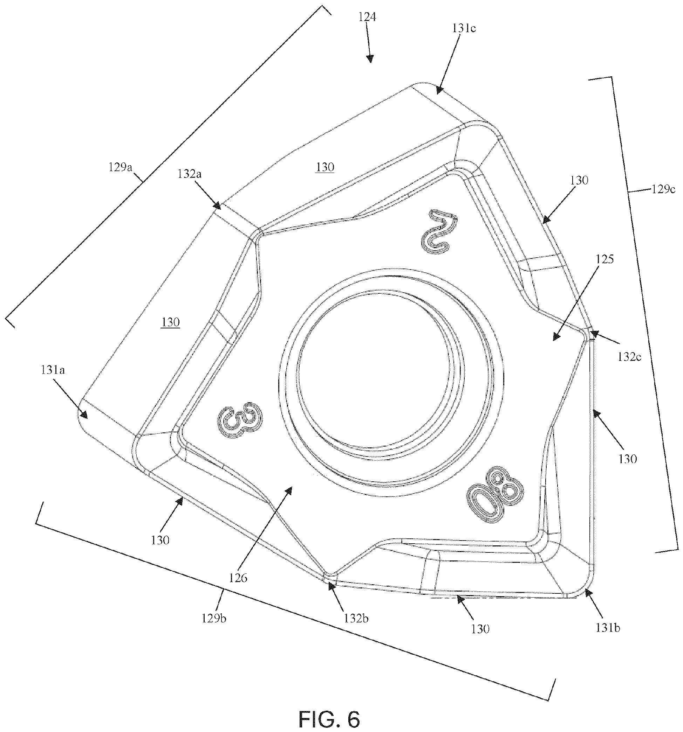

Fig. 6 is a front perspective view of the cutting insert of Fig. 2

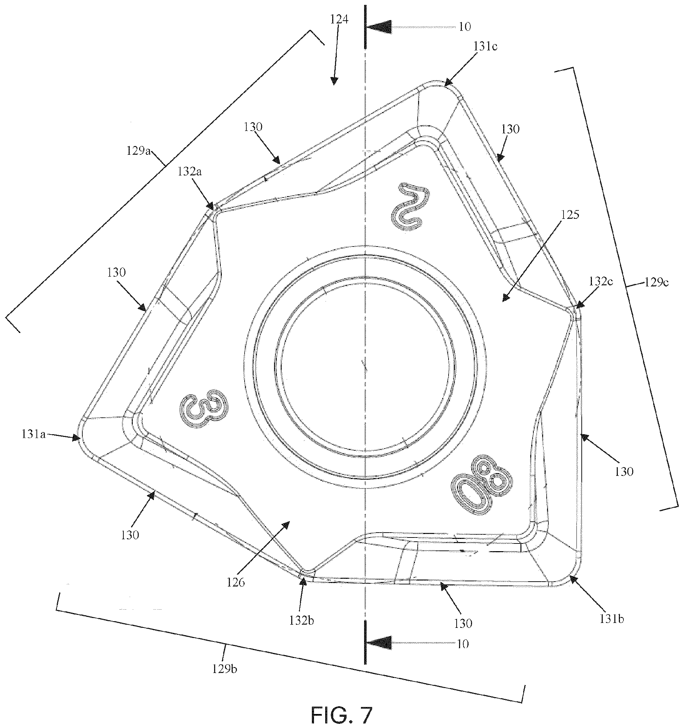

Fig. 7 is a front view of the cutting insert of Fig. 2.

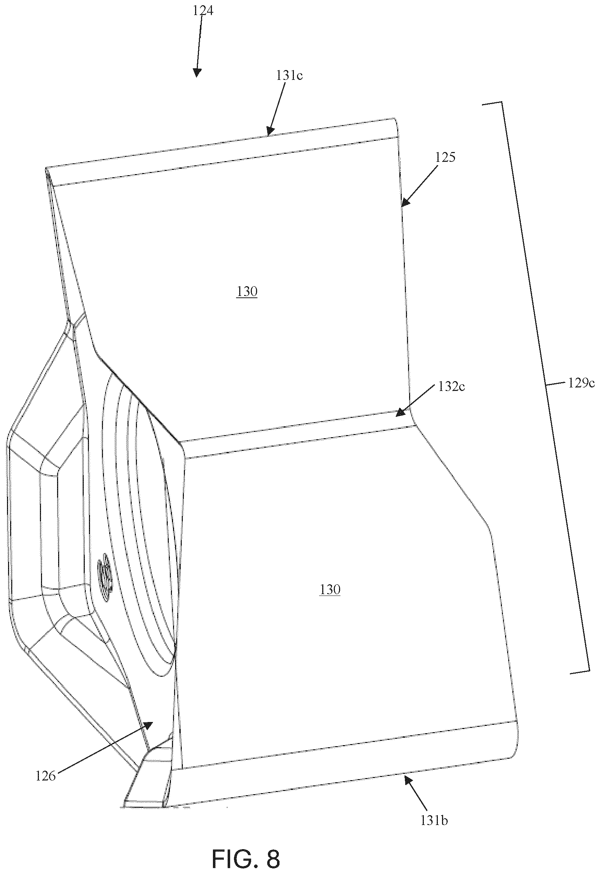

Fig. 8 is a side perspective of the cutting insert of Fig. 2.

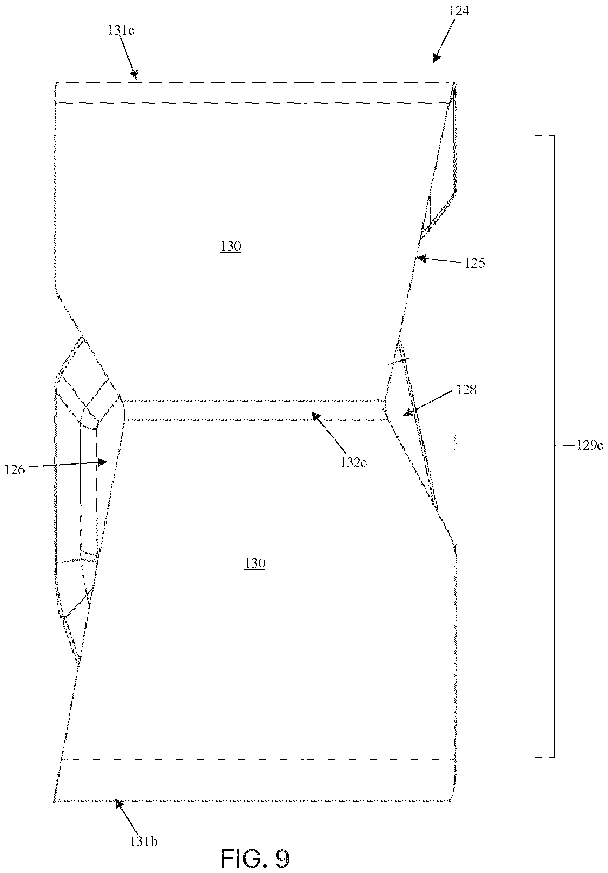

Fig. 9 is a side view of the cutting insert of Fig. 2.

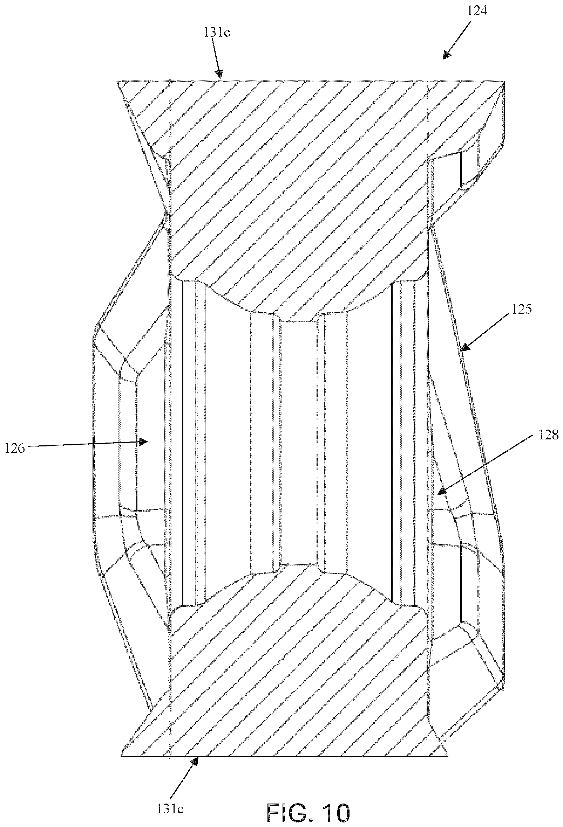

Fig. 10 is a side cross-sectional view of the cutting insert of Fig. 2 taken along line 10-10 in Fig. 7.

### DETAILED DESCRIPTION

Referring now to the drawings, there is illustrated a cutting tool 110 having a main tool body 112. The main tool body 112 defines a plurality of insert pockets 114. Each pocket 114 includes a main seat floor 116, a lower seat wall 118, a mid seat wall 120, and an upper seat wall 122. The lower seat wall 118, the mid seat wall 120, and the upper seat wall 122 are generally oriented at right angles to the main seat floor 116. The lower seat wall 118 and the mid seat wall 120 are generally oriented at an angle greater than 120 degrees, and the mid seat wall 120, and the upper seat wall 122 are generally oriented at an angle less than 120 degrees. Disposed in each pocket 114 is a cutting insert 124.

The cutting insert 124 has an insert body 125 including a front face 126, a back face 128, with first, second, and third main circumferential sides 129a, 129b, and 129c extending between the front face 126 and the back face 128 and about the circumference of the insert body 125. First, second, and third cutting corners 131a, 131b, and 131c are disposed between the first and second main circumferential sides 129a and 129b, the second and third main circumferential sides 129b and 129c, and the third and first main circumferential sides 129c and 129a respectively. The cutting corners 131a, 131b, and 131c are generally formed at an angle less than 120 degrees. Each of the main circumferential sides 129a, 129b, and 129c includes two side seating surfaces 130 extending between adjacent cutting corners 131a 131b, and 131c and has a transition corner 132a, 132b, and 1232c disposed therebetween. Each of the transition corners 132a, 132b, and 132c are generally formed at an angle greater than 120 degrees.

Either the seat walls (the lower seat wall 118, the mid seat wall 120, and the upper seat wall 122), or the side seating surfaces 130 are convex.

In at least one embodiment, where the side seating surfaces 130 are convex, the cutting insert 124 is disposed in the pocket 114 and one of the front surface 126 or the back surface 128 engages the main seat floor 116. Three consecutive side seating surfaces 130 will engage the lower seat wall 118, the mid seat wall 120, and the upper seat wall 122, which, in this example, are generally planar.

It is noted that in embodiments where the cutting insert 124 is indexable, the orientation of the cutting insert 124 in the pocket 114 may be chosen depending on the desired cutting corner 131a, 131b or 131c to be exposed for use.

In the present example, the side seating surfaces 130 form curved periphery segments on the insert body 125 and the lower seat wall 118, the mid seat wall 120, and the upper seat wall 122 form generally flat support walls in the pocket 114.

With curved periphery segments, the cutting insert 124 and the pocket 114 may be designed and manufactured to have nominal contact points or lines generally centrally located on the side seating surfaces 130 and the lower seat wall 118, the mid seat wall 120, and the upper seat wall 122 to orient side seating surfaces 130 in the pocket 114 to a chosen optimized angle, and achieve 3-point or line contact, yet, due to variation in manufacture, when necessary the cutting insert 124 may be adjusted in the pocket to maintain 3-point or line contact. For example, the cutting insert 124 may be adjusted clockwise in the pocket 114 and thus the 3-point or line contact locations become located clockwise of the nominal central locations, or counter-clockwise to become located counter-clockwise of the nominal central locations.

By utilizing the cutting insert 124 as described above, it is believed that such an insert can be molded or molded and periphery ground and still cooperate with the pocket 114 to result in 3-point or 3-line contact, even when minor variations exist in the dimension(s) of the cutting insert 124 or the location(s) of the lower seat wall 118, the mid seat wall 120, and the upper seat wall 122 of the pocket 114.

In at least one embodiment, where the lower seat wall 118, the mid seat wall 120, and the upper seat wall 122 are convex, the cutting insert 124 is disposed in the pocket 114 and one of the front surface 126 or the back surface 128 engages the main seat floor 116. Three consecutive side seating surfaces 130, which, in this example, are generally planar, will engage the lower seat wall 118, the mid seat wall 120, and the upper seat wall 122.

It is again noted that in embodiments where the cutting insert 124 is indexable, the orientation of the cutting insert 124 in the pocket 114 may be chosen depending on the desired cutting corner 131a, 131b or 131c to be exposed for use.

In the present example, the lower seat wall 118, the mid seat wall 120, and the upper seat wall 122 form curved interior segments on the pocket 114 and side seating surfaces 130 form generally flat support walls on the cutting insert 124.

With curved interior segments, the cutting insert 124 and the pocket 114 may be designed and manufactured to have nominal contact points or lines generally centrally located on the side seating surfaces 130 and the lower seat wall 118, the mid seat wall 120, and the upper seat wall 122 to orient side seating surfaces 130 in the pocket 114 to a chosen optimized angle, and achieve 3-point or line contact, yet, due to variation in manufacture, when necessary the cutting insert 124 may be adjusted in the pocket to maintain 3-point or line contact. For example, the cutting insert 124 may be adjusted clockwise in the pocket 114 and thus the 3-point or line contact locations become located clockwise of the nominal central locations, or counter-clockwise to become located counter-clockwise of the nominal central locations.

While principles and modes of operation have been explained and illustrated with regard to particular embodiments, it must be understood, however, that this may be practiced otherwise than as specifically explained and illustrated without departing from its spirit or scope.

## Claims

1. A milling tool comprising:
a tool body defining an insert pocket having a main seat floor, a lower seat wall, a mid seat wall, and an upper seat wall; the lower seat wall, the mid seat wall, and the upper seat wall being generally planar; and
a cutting insert disposed in the insert pocket, the cutting insert having an insert body including a front face and a back face with first, second, and third main circumferential sides extending between the front face and the back face and about the circumference of the insert body, first, second, and third cutting corners disposed between the first and second main circumferential sides, the second and third main circumferential sides, and the third and first main circumferential sides respectively, each of the main circumferential sides including two side seating surfaces extending between adjacent cutting corners and having a transition corner disposed therebetween, each side seating surface is convex, one of the front surface or the back surface engaging the main seat floor, three consecutive side seating surfaces engaging the lower seat wall, the mid seat wall, and the upper seat wall, respectively.

2. The milling tool of Claim 1 where the angle formed by the mid seat wall and the upper seat wall is less than 120 degrees, and where the angle formed by the lower seat wall and the mid seat wall is greater than 120 degrees, in particular where the lower seat wall, the mid seat wall, and the upper seat wall are generally oriented at right angles to the main seat floor.

3. The milling tool of Claim 1 or 2 where each of the three consecutive side seating surfaces engaging the lower seat wall, the mid seat wall, and the upper seat wall, respectively at positions clockwise of nominal central locations of each of the lower seat wall, the mid seat wall, and the upper seat wall.

4. The milling tool of Claim 1 or 2 where each of the three consecutive side seating surfaces engaging the lower seat wall, the mid seat wall, and the upper seat wall, respectively at positions counter-clockwise of nominal central locations of each of the lower seat wall, the mid seat wall, and the upper seat wall.

5. A milling tool comprising:
a tool body defining an insert pocket having a main seat floor, a lower seat wall, a mid seat wall, and an upper seat wall, each of a lower seat wall, a mid seat wall, and an upper seat wall is convex; and
a cutting insert disposed in the insert pocket, the cutting insert having an insert body including a front face and a back face with first, second, and third main circumferential sides extending between the front face and the back face and about the circumference of the insert body, first, second, and third cutting corners disposed between the first and second main circumferential sides, the second and third main circumferential sides, and the third and first main circumferential sides respectively, each of the main circumferential sides including two side seating surfaces extending between adjacent cutting corners and having a transition corner disposed therebetween, each side seating surface being generally planar, one of the front surface or the back surface engaging the main seat floor, three consecutive side seating surfaces engaging the lower seat wall, the mid seat wall, and the upper seat wall, respectively.

6. The milling tool of Claim 5 where each of the lower seat wall, the mid seat wall, and the upper seat wall are arcuate in a direction along the circumference of the insert body between respective cutting corners and transition corners, in particular where each of the lower seat wall, the mid seat wall, and the upper seat wall are arcuate in a direction along an axis of the insert body between the front face and the back face or in particular where each of the lower seat wall, the mid seat wall, and the upper seat wall are arcuate in a direction along the circumference of the insert body between respective cutting corners and transition corners, and arcuate in a direction along an axis of the insert body between the front face and the back face.

7. The milling tool of any of Claims 5 and 6 where each of the three consecutive side seating surfaces engaging the lower seat wall, the mid seat wall, and the upper seat wall, respectively at positions clockwise of nominal central locations of each of the lower seat wall, the mid seat wall, and the upper seat wall or where each of the three consecutive side seating surfaces engaging the lower seat wall, the mid seat wall, and the upper seat wall, respectively at positions counter-clockwise of nominal central locations of each of the lower seat wall, the mid seat wall, and the upper seat wall.

8. A cutting insert for a milling tool comprising:
an insert body including a front face and a back face with first, second, and third main circumferential sides extending between the front face and the back face and about the circumference of the insert body, first, second, and third cutting corners disposed between the first and second main circumferential sides, the second and third main circumferential sides, and the third and first main circumferential sides respectively, each of the main circumferential sides including two side seating surfaces extending between adjacent cutting corners and having a transition corner disposed therebetween, each side seating surface is convex.

9. The cutting insert of Claim 8 where each side seating surface is arcuate in a direction along the circumference of the insert body between respective cutting corners and transition corners and/or where each side seating surface is arcuate in a direction along an axis of the insert body between the front face and the back face.

10. The cutting insert of Claim 8 or 9 where each side seating surface is arcuate in a direction along the circumference of the insert body between respective cutting corners and transition corners, and arcuate in a direction along an axis of the insert body between the front face and the back face.

11. The cutting insert of any of Claims 8-10 where each of the cutting angles are formed at the same angle and that angle is less than 120 degrees and/or where each of the transition corners is formed at the same angle and that angle is greater than 120 degrees.

12. The cutting insert of any of Claims 8-11 where each of the cutting angles are formed at the same angle and that angle is less than 120 degrees, and where each of the transition corners is formed at the same angle and that angle is greater than 120 degrees.

13. The cutting insert of any of Claims 8-12 where the cutting insert is molded.

14. The cutting insert of Claim 13 where the cutting insert is periphery ground.

15. The cutting insert of any of claims 8-14 where the cutting insert is indexable.
